(19) Europäisches Patentamt

European Patent Office

Office européen des brevets

(11) **EP 1 077 500 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(51) Int Cl.$^7$: **H01M 10/26**

(21) Anmeldenummer: **00114811.3**

(22) Anmeldetag: **11.07.2000**

(54) **Alkalischer Akkumulator mit Ni(OH)2 enthaltenden positiven Elektroden**

Alcaline accumulator with Ni(OH)2 positive electrode

Accumulateur alcalin avec une electrode positive comprenant Ni(OH)2

(84) Benannte Vertragsstaaten:
**AT BE CH CY DE DK ES FI FR GB GR IE IT LI LU MC NL PT SE**

(30) Priorität: **19.08.1999 DE 19939369**

(43) Veröffentlichungstag der Anmeldung:
**21.02.2001 Patentblatt 2001/08**

(73) Patentinhaber: **VARTA Automotive Systems GmbH**
**30419 Hannover (DE)**

(72) Erfinder:
• **Bäuerlein, Peter, Dr.**
**29690 Lindwedel (DE)**
• **Föller, Erika**
**61352 Bad Homburg (DE)**

(74) Vertreter: **Lins, Edgar, Dipl.-Phys. Dr.jur. et al Gramm, Lins & Partner GbR,**
**Theodor-Heuss-Strasse 1**
**38122 Braunschweig (DE)**

(56) Entgegenhaltungen:
**FR-A- 2 632 121**   **US-E- R E34 752**

• **PATENT ABSTRACTS OF JAPAN vol. 1997, no. 05, 30. Mai 1997 (1997-05-30) -& JP 09 017428 A (SANYO ELECTRIC CO LTD), 17. Januar 1997 (1997-01-17)**
• **PATENT ABSTRACTS OF JAPAN vol. 008, no. 021 (E-224), 28. Januar 1984 (1984-01-28) -& JP 58 184274 A (FUJIKURA DENSEN KK), 27. Oktober 1983 (1983-10-27)**

**Beschreibung**

Gegenstand der Erfindung ist ein alkalischer Akkumulator mit einer im wesentlichen $Ni(OH)_2$ enthaltenden positiven Elektrode, die Cobaltverbindungen wie CoO, $Co(OH)_2$ oder Co-Metall enthält.

Nickelhydroxid $Ni(OH)_2$ stellt das elektrochemisch aktive Material der positiven Elektroden von Nickel-Cadmium- und Nickel-Metallhydrid-Batterien dar, die Gleichung für die Lade- bzw. Entladereaktion lautet:

$$Ni(OH)_2 + OH^- \leftrightarrow NiOOH + H_2O + e^-$$

Die Kapazität der positiven Elektrode hängt im hohen Maße von der Qualität des Leitgerüstes ab, welches für die elektrische Anbindung der $Ni(OH)_2$-Partikel sorgt. Bei Masseelektroden, wie sie in Knopfzellen Verwendung finden, mischt man dem Nickelhydroxid feines Nickelpulver zu, um eine leitfähige Masse zu erhalten.

Erst durch Zugabe von Kobaltverbindungen, wie CoO, $Co(OH)_2$ oder Co-Metall, welche zumindest teilweise im Elektrolyten löslich sind und während der ersten Ladung der Zelle in leitfähiges CoOOH überführt werden, erhält man zyklenstabile Zellen mit hoher Ausnutzung des Nickelhydroxids. Die Masseausnutzung einer positiven Masseelektrode läßt sich dadurch von ca. 200 mAh/g $Ni(OH)_2$ auf 250 mAh/g $Ni(OH)_2$ steigern.

Auch die Zyklenstabilität wird durch die Zusätze erheblich verbessert. Das Ausmaß des Einflusses hängt ab von der Menge der zugesetzten Co-Verbindung (siehe beispielsweise US Re 34,752) und auch von deren Typ, also $Co(OH)_2$, CoO, $Co_3O_4$, etc. Der Grund hierfür ist die unterschiedliche Löslichkeit der jeweiligen Verbindungen im Elektrolyten denn, je besser die Löslichkeit desto höher die Masseausnutzung.

Es ist bekannt, daß mehrere, d.h. wenigstens 2 Modifikationen dreiwertigen CoOOH's existieren. Beide Modifikationen besitzen eine geringe Löslichkeit im Elektrolyten, unterscheiden sich jedoch deutlich in ihrer spezifischen Leitfähigkeit. Die durch elektrochemische Oxidation hergestellte Modifikation weist eine 500000fach höhere spezifische Leitfähigkeit auf, als die chemisch durch Oxidation von $Co(OH)_2$ mit Luftsauerstoff hergestellte Modifikation.

Aus der US Re 34 752 ist auch bekannt, daß sich $Co(OH)_2$ durch Luftsauerstoff, welcher im Elektrolyten gelöst ist in schwerlösliches CoOOH mit geringer spezifischer Leitfähigkeit umwandelt.

Die elektrochemische Erzeugung von leitfähigem CoOOH gemäß US Re 34 752 läuft wie folgt ab:

Durch Lagerung im Elektrolyten, vorzugsweise bei erhöhter Temperatur, bildet sich aus CoO bzw. $Co(OH)_2$ der blaue, lösliche Tetrahydroxo-Komplex, welcher schließlich elektrochemisch in CoOOH mit ausreichender spezifischer Leitfähigkeit überführt wird, siehe auch US Re 34 752.

$$CoO + H_2O + 2\ OH^- \rightarrow [Co(OH)_4]^{2-}$$

Oxidation des Tetrahydroxokobaltats(II)

$$[Co(OH)_4]^{2-} \rightarrow [Co(OH)_4]^- + e^-$$

Zerfall des Tetrahydroxokobaltats(III) zu CoOOH

$$[Co(OH)_4]^- \rightarrow CoOOH + H_2O + OH^-$$

Da die Oxidation des $Co(OH)_2$ naturgemäß an der Kontaktfläche $O_2$/Elektrolyt zuerst erfolgt, bildet sich um den $Co(OH)_2$-Partikel eine Deckschicht aus schwer löslichem und schlecht leitfähigem CoOOH. Diese Deckschicht führt dazu, daß ein nennenswerter Anteil des eingesetzten $Co(OH)_2$ bzw. CoO nicht aufgelöst werden kann und somit ungenutzt in der Elektrode verbleibt. Daher ist es wünschenswert, die Bildung von schwer löslichem, schlecht leitfähigem CoOOH zu verhindern.

Um eine ausreichende Menge an leitfähigem CoOOH zu erzeugen, muß man entsprechend hohe Mengen an CoO, welches vorzugsweise eine möglichst hohe Oberfläche aufweist, einsetzen. Da Co-Verbindungen in der Regel teuer sind, erscheint es erstrebenswert, den Gehalt an Co-Verbindungen in der positiven Elektrode möglichst klein zu halten. Dies gelingt nur, wenn nicht unötig viel CoO infolge der Bildung schwerlöslicher CoOOH-Anteile ungenutzt in der Elektrode verbleibt.

Der Erfindung liegt die Aufgabe zugrunde, den Gehalt an Co-Verbindungen in der Elektrode gering zu halten und die Bildung von schwerlöslichem, schlecht leitfähigem CoOOH zu unterdrücken und damit die Zyklenstabilität von Akkumulatoren der eingangs genannten Art zu erhöhen.

Die Aufgabe wird bei einem alkalischen Akkumulator der in Anspruch 1 genannten Gattung durch die kennzeichnenden Merkmale des Anspruchs 1 gelöst. In den Unteransprüchen sind vorteilhafte Weiterbildungen der Erfindung beschrieben.

Die eingesetzten Komplexbildner müssen folgende Bedingungen erfüllen:

- sie müssen im Elektrolyten hinreichend lange stabil sein

- sie dürfen keinen schädlichen Einfluß auf die Zelle ausüben, z.B. eine überproportionale Erhöhung der Selbstentladung oder Auflösung von $Ni(OH)_2$

- eine Abscheidung von leitfähigem CoOOH aus den entsprechenden Co-Komplexen sollte möglich sein

Die Einhaltung dieser Bedingungen erreicht man zum einen durch die Wahl der erfindungsgemäßen Komplexbildner, zum anderen durch die Einhaltung einer bestimmten Konzentration dieser Komplexbildner im Elektrolyten. Die Konzentration muß so hoch sein, daß sie zur Auflösung der dünnen Deckschichten ausreicht, andererseits muß sie so niedrig bemessen sein, daß sie nicht zur Auflösung des gesamten CoOOH's des Leitgerüstes ausreicht.

Da sich Co und Ni chemisch sehr ähnlich sind, wird natürlich auch das Aktivmaterial $Ni(OH)_2$ durch die Komplexbildner beeinflußt, es kann z.B. Ni in komplexierter Form in Lösung gehen. Der Wahl des richtigen Liganden und der Einsatz in der richtigen Konzentration kommt auch in dieser Hinsicht eine besondere Bedeutung zu. Andererseits könnten dieser Ähnlichkeit zwischen Co und Ni bezüglich ihres Verhaltens zu den jeweiligen Liganden auch positive Aspekte auftreten, beispielsweise die Auflösung von $NiO_x$-Deckschichten auf dem Substrat, sei es Foam oder Ni-Pulver.

Mit Hilfe der erfindungsgemäß eingesetzten Komplexbildner gelingt es, schwer lösliche, durch Reaktion von $Co(OH)_2$ mit $O_2$ erzeugte, schlecht leitende CoOOH-Deckschichten auf dem $Co(OH)_2$-Kom wieder aufzulösen. Folgende Gleichungen verdeutlichen den Sachverhalt, wobei L = Ligand = eingesetzter Komplexbildner

$$CoOOH + H_2O + xL^{n-} \rightarrow CoL_x^{(x \cdot n - 3) \cdot} + 3OH^-$$

Die Lage dieses Gleichgewichts wird bestimmt durch die Komplexbildungskonstante, ein Maß für die Stabilität des löslichen Co-L-Komplexes (L = Ligand), und das Löslichkeitsprodukts von CoOOH. Je stabiler der Komplex, desto stärker liegt das Gleichgewicht auf der rechten Seite, das Resultat ist die zunehmende Auflösung des Kobaltoxyhydroxids

Die Auflösung der CoOOH-Deckschichten aus dem eingesetzten CoO bzw. $Co(OH)_2$ durch Komplexbildung führt zu einer verbesserten Belastbarkeit und in jedem Falle zu einer höheren Zyklenlebensdauer und einer besseren Masseausnutzung des eingesetzten Nickelhydroxids.

Folgende Komplexbildner (Liganden) wurden untersucht:

Tab. 1:

| Eingesetzte Komplexbildner | |
|---|---|
| Komplexbildner (Ligand) | |
| **Amine** | |
| Ethylendiamin | en |
| Ethanolamin | ea |
| Ethylendiamintetraessigsäure | edta |
| **Oxime** | |
| Dimethylglyoxim (Na-Salz) | dmg |
| Benzaldyhydoxim | ba |

Um die Komplexbildner auf die oben genannten Eigenschaften wie hinreichende Stabilität im Elektrolyten zu prüfen, wurden folgende Untersuchungen durchgeführt

**Stabilitätsuntersuchungen**

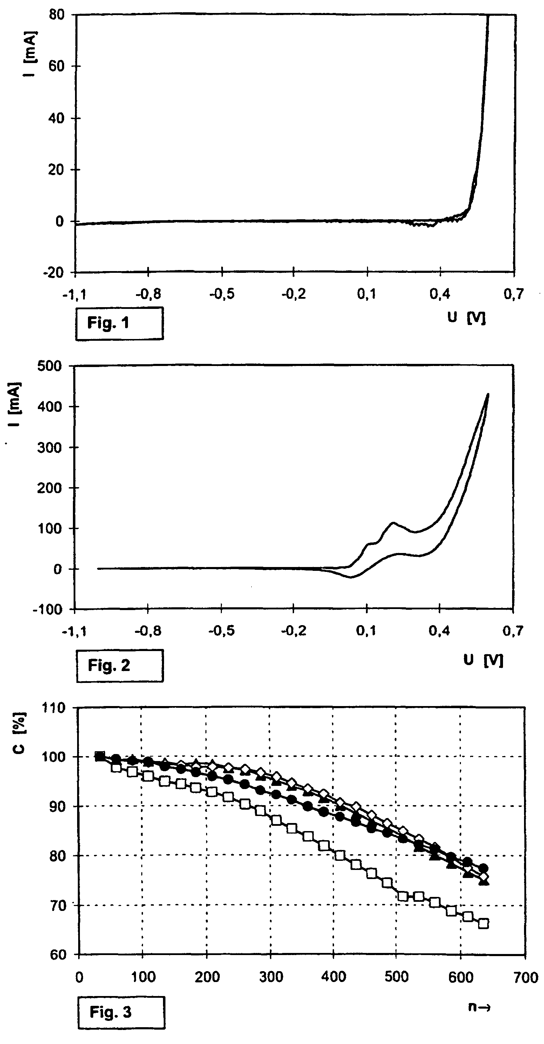

Die elektrochemische Stabilität wurde mittels Zyklovoltametrie untersucht Vermessen wurde ein Elektrolyt, bestehend aus 6.5N KOH + 0.5N LiOH, welcher 5% des jeweiligen Liganden enthielt. Dieser wurde in eine Zelle mit Ni-Elektrode gebracht, als Bezugselektrode diente Hg/HgO. Mit einer Scanrate von 2 mV/s wurde ein Potentialbereich von +0.6 V bis -1.0 V versus Hg/HgO, zuerst in oxidativer Richtung durchlaufen. Figur 1 zeigt ist ein Zyklovoltamogramm am Beispiel von in Lauge gelöstem **edta** (ohne Co-Zusätze). Ab einem bestimmten Potential, abhängig vom Typ des Komplexbildners, ist ein Anstieg des Stromes zu beobachten, hervorgerufen durch die Entwicklung von $O_2$ an der Ni-Arbeitselektrode. Ansonsten sind keine Peaks, welche auf Redoxreaktionen des Liganden schließen ließen, zu erkennen.

**Auflösungsversuche mit chemisch oxidiertem CoOOH**

0.5 g von chemisch oxidiertem β-CoOOH werden mit 10 ml eines Elektrolyten versetzt, welcher eine definierte Menge der zu untersuchenden Liganden enthält. Anschließend wird das Reaktionsgefäß luftdicht verschlossen und 7d bei Raumtemperatur gelagert. Die überstehende Lösung wird abfiltriert, und mittels AES (Atom-Emissions-Spektoskopie) hinsichtlich komplexiert gelösten Co's untersucht.
Die Ergebnisse aus dieser Untersuchung sind anhand einiger Beispiele in Tabelle 2 wiedergegeben.

Tab. 2:

| Beispiele zur Löslichkeit von chemisch oxidiertem β-CoOOH in ligandenhaltigem Elektolyt | | |
|---|---|---|
| | | **CoOOH** |
| **Ligand** | $c_{Ligand}$ **[mol/L]** | $c_{Cogelöst}$ **[mg/L]** |
| **en** | 1.66 | 18 |
| **edta** | 0.34 | 614 |
| **dmg** | 0.33 | 4230 |
| **ohne** | 0.00 | n.n. |
| n.n. - nicht nachweisbar | | |

Insbesondere mit dem Liganden **dmg** im Elektrolyten erreicht man eine gute Löslichkeit von durch chemische Oxidation hergestellten β-CoOOH.

**Abscheidungsversuche**

Zu 200 mL Elektrolyt (6.5 N KOH + 0.5 N LiOH) gibt man 20.0 g des jeweiligen Liganden. Zu dieser Lösung gibt man anschließend 20.0 g CoO, schüttelt um und bewahrt eine Woche bei Raumtemperatur auf. Anschließend filtriert man vom ungelösten CoO ab. Das klare Filtrat überführt man schließlich in die bereits beschriebene CV-Meßzelle.
In Figur 2 ist dies am Beispiel eines Co-edta-Komplexes dargestellt. Im Falle des Co-edta-Komplexes erkennt man deutlich ausgeprägte Redoxpeaks. Für die Oxidation findet man zwei Peaks bei 0.1 V und 0.2 V vs. Hg/HgO, wobei der zweite Peak intensiver ist. Für die Reduktion findet sich ein Peak bei ca. 0.08 V vs. Hg/HgO. Im Falle des Co-dmg-Komplexes findet sich ein Oxidationspeak bei ca. 0.15 V vs. Hg/HgO, welcher einen Co(II)/Co(III)-Übergang zugeordnet werden kann, der entsprechende Reduktionspeak ist weniger intensiv und erscheint bei ca. 0.0 V vs. Hg/HgO.

**Elektrochemische Untersuchungen**

**Masseausnutzung und Zyklenstabilität**

Wird in Knopfzellen mit nur 5% CoO untersucht:

Positive Elektrode:   1.80 g Masse (65% Ni(OH)$_2$ + 5% CoO + 30% Ni-Pulver T 255)
Negative Elektrode:   2.20 g einer Mischung aus 97% AB5-Legierung, 2% Ruß und 1 % PTFE
Separator:   PE/PP-Vlies

Elektrolyt:           6.5 n KOH + 0.5 n LiOH, 350 µl je Knopfzelle

Folgendes Zyklenschema kommt zum Einsatz:

- Elektroden 2 h bei 20°C in Elektrolyt lagern
- Zellenbau
- Zellen 1 d bei 45°C lagern, 15 h mit C/15 bei Raumtemp. laden, 1 d bei 45°C lagern, Restentladung mit C/5 bis 1.0 V
- 1 Zyklus: Laden, 15 h mit C/10, Entladen mit C/5 bis 1.0 V
- 9 Zyklen: Laden 7 h mit C/5, Entladen mit C/5 bis 1.0 V
- 24 Zyklen: Laden 3 h mit C/2, Entladen mit C/2 bis 1.0 V + 1 Zyklus Laden 7 h mit C/5, Entladen mit C/5 bis 1.0 V; dies ist n-mal zu wiederholen

Die Ergebnisse sind in den Tabellen 3 und 4 zusammengefaßt (Tabelle 3 = Masseausnutzung, Tabelle **4** = Zyklenstabilität). Viele der eingesetzten Komplexbildner beeinflußen die Masseausnutzung des $Ni(OH)_2$ kaum. Schwach ausgeprägte positive Effekte mit Steigerungen um 2% ergeben sich beim Einsatz von Dimethylglyoxim **(dmg).**

Tab. 3:

| Masseausnutzung von $Ni(OH)_2$ in NiMH- Knopfzellen mit Liganden im Elektrolyten, gezeigt an einigen typischen Beispielen | | | | |
|---|---|---|---|---|
| **Ligand** | $c_{Ligand}$ **[mmol/L]** | $c_{Ligand}$ **[%]** | **CoO-Gehalt [%]** | **C [% Std.]** |
| kein | 0.0 | 0 | 5 | 100 |
| en | 16.6 | 0.1 | 5 | 100 |
| ea | 16.4 | 0.1 | 5 | 100 |
| edta | 34.2 | 1.0 | 5 | 100 |
| dmg | 32.9 | 1.0 | 5 | 101 |
| dmg | 8.23 | 0.25 | 5 | 102 |
| dmg | 0.823 | 0.025 | 5 | 102 |
| ba | 8.25 | 0.1 | 5 | 100 |

Tab. 4:

| Zyklenlebensdauer von NiMH-Knopfzellen mit ligandenhaltigen Elektrolyten, aufgezeigt an einigen charakteristischen Beispielen | | |
|---|---|---|
| **Ligand** | $c_{Ligand}$ **[mmol/L]** | **C/5-Zyklen bis 90%** |
| **kein** | 0.0 | 266 |
| **en** | 16.6 | 311 |
| **ea** | 16.4 | 344 |
| **edta** | 34.2 | 395 |
| **dmg** | 32.9 | 415 |
| **dmg** | 8.23 | 427 |
| **dmg** | 0.823 | 357 |
| **ba** | 8.25 | 374 |

Knopfzellen mit Standardelektrolyt ohne zugesetzten Komplexbildner erreichen nach 266 Zyklen 90% ihrer Anfangskapazität. Ein Zusatz von Komplexbildnern, insbesondere von **dmg, edta, ba, ea** und **en,** erhöht die Zyklenlebensdauer beträchtlich. Im Falle von **dmg** erreicht die C/5-Kapazität 90% ihres Anfangswertes nach ca. 420 Zyklen, im Falle des **edta** nach 395 Zyklen, im Falle von **ba** nach 374 Zyklen, im Falle des **ea** nach 344 Zyklen und im Falle des **en** nach 311 Zyklen. Dies sind Steigerungen der Zykleniebensdauern um 30% bis 70%. Neben den in Tabelle **4** genannten Komplexbildnern sind beispielsweise auch Salicylaldoxim oder N,N-Bis-(salicyliden)-ethylendiamin geeignet.

Den Einfluß der Konzentration auf das Zyklen- verhalten verdeutlicht Figur 3 am Beispiel von **dmg**. Aufgetragen ist die auf 100% normierte Kapazität über der Zyklenzahl, wobei: □eine Zelle ohne dmg, ▲ eine Zelle mit einem dmg-Gehalt von 32.9 mmol/L, (raute) eine Zelle mit einem dmg-Gehalt von 8.23 mmol/L und ● eine Zelle mit einem dmg-Gehalt von 0.823 mmol/L. Die Figur zeigt, daß selbst geringe Mengen an dmg, die Zyklenlebensdauer verbessern. Man erreicht selbst bei einer Konzentration des Liganden im Elektrolyten von 0.823 mmol/L noch eine deutliche Steigerung der Zyklenlebensdauer. 80% der Anfangskapazität werden in diesem Fall bei ca. 570 Zyklen erreicht, wohingegen Zellen ohne Komplexbilder bereits nach 410 Zyklen den Wert von 80% ihrer Anfangskapazität erreichen.

## Patentansprüche

1. Alkalischer Akkumulator mit einer im Wesentlichen $Ni(OH)_2$ enthaltenden positiven Elektrode, die Cobaltverbindungen wie CoO, $Co(OH)_2$ oder Co-Metall enthält, und mit einem Elektrolyten, **dadurch gekennzeichnet, dass** im Elektrolyten ein zur Auflösung von chemisch oxidiertem, schwer löslichem CoOOH geeigneter organischer Komplexbildner gelöst ist, der in einer Konzentration von 0,003 bis 0,4 mol % der Gesamtmenge an Cobalt im Akkumulator enthalten ist.

2. Alkalischer Akkumulator nach Anspruch 1, **dadurch gekennzeichnet, dass** der Cobaltkomplexbildner ein ein- bis zweizähniger Ligand mit Amin-, Hydroxy-, Oxim-, und/oder Ketogruppen ist.

3. Alkalischer Akkumulator nach Anspruch 1 oder 2, **dadurch gekennzeichnet, dass** der Cobaltkomplexbildner aus der Gruppe bestehend aus Ethylendiamin, Ethanolamin, Ethylendiamintetraessigsäure, Dimethylglyoxim oder Bezaldehydoxim, Salicylaldoxim und N,N-Bis-(salicyliden)-ethylendiamin ausgewählt ist.

4. Akkumulator nach Anspruch 3, **dadurch gekennzeichnet, dass** 0,025 bis 0,25 % Dimethylglyoxim im Elektrolyt enthalten sind.

## Claims

1. Alkaline storage battery having a positive electrode which comprises substantially $Ni(OH)_2$ and comprises cobalt compounds such as CoO, $Co(OH)_2$ or Co metal, and having an electrolyte, **characterized in that** an organic complexing agent suitable for dissolving chemically oxidized, sparingly soluble CoOOH is dissolved in the electrolyte and is present in the storage battery in a concentration of 0.003 to 0.4 mol% of the total amount of cobalt.

2. Alkaline storage battery according to Claim 1, **characterized in that** the cobalt complexing agent is a mono- to bidentate ligand having amine, hydroxyl, oxime and/or keto groups.

3. Alkaline storage battery according to Claim 1 or 2, **characterized in that** the cobalt complexing agent is selected from the group consisting of ethylenediamine, ethanolamine, ethylenediaminetetraacetic acid, dimethylglyoxime or benzaldehyde oxime, salicylaldoxime and N,N-bis(salicylidene)-ethylenediamine.

4. Storage battery according to Claim 3, **characterized in that** 0.025 to 0.25% dimethylglyoxime is present in the electrolyte.

## Revendications

1. Pile alcaline comprenant une électrode positive, contenant essentiellement du $Ni(OH)_2$ et des composés de cobalt tels que CoO, $Co(OH)_2$ ou cobalt métallique, et un électrolyte,
   **caractérisée en ce que**
   dans l'électrolyte se trouve dissous un agent complexant organique approprié pour dissoudre du CoOOH chimiquement oxydé et difficilement soluble, cet agent complexant étant contenu dans la pile à une concentration de 0,003 à 0,4 % molaire de la quantité totale de cobalt.

2. Pile alcaline selon la revendication 1,
   **caractérisée en ce que**

l'agent complexant de cobalt est un ligand à une ou deux dent(s) avec des groupes amine, hydroxy, oxime et/ou céto.

3. Pile alcaline selon la revendication 1 ou 2,
   **caractérisée en ce que**
   l'agent complexant de cobalt est sélectionné dans le groupe constitué de l'éthylènediamine, l'éthanolamine, l'acide tétraacétique d'éthylènediamine, le diméthylgiyoxime ou le benzaldéhydoxime, le salicylaldoxime et la N,N-bis-(salicylidène)-éthylènediamine.

4. Accumulateur selon la revendication 3,
   **caractérisée en ce que**
   0,025 à 0,25 % de diméthylglyoxime sont contenus dans l'électrolyte.

**Fig. 1**

**Fig. 2**

**Fig. 3**